# EUROPÄISCHE PATENTSCHRIFT

(11) **EP 1 456 822 B1**
(45) Veröffentlichungstag und Bekanntmachung des Hinweises auf die Patenterteilung: **02.08.2006**
(21) Anmeldenummer: 02791639.4
(22) Anmeldetag: 17.12.2002
(51) Int. Cl.: G07F 19/00

(54) **VERFAHREN UND SYSTEM ZUR ABWICKLUNG VON NUTZUNGSBERECHTIGUNGSÜBERPRÜFUNGS- UND/ODER ZAHLUNGSVORGÄNGEN MITTELS EINES MOBILTELEFONIE-ENDGERÄTS, EINER ABFRAGESTATION UND EINES STEUERUNGSPROGRAMMS**
METHOD AND SYSTEM FOR CARRYING OUT VERIFICATION PROCESSES WITH REGARD TO AUTHORIZATION OF USE AND/OR PAYMENT PROCESSES BY MEANS OF A MOBILE TELEPHONE TERMINAL, MOBILE TELEPHONE TERMINAL, INTERROGATION STATION, CONTROL PROGRAM FOR A MOBILE TELEPHONE TERMINAL AND CONTROL PROGRAM FOR AN INTERROGATION S
PROCEDE ET SYSTEME DE DEROULEMENT DE PROCESSUS DE VERIFICATION DE L'AUTORISATION D'UTILISATION ET / OU DE PAIEMENT A L'AIDE D'UN TERMINAL DE TELEPHONIE MOBILE, TERMINAL DE TELEPHONIE MOBILE ASSOCIE, STATION D'INTERROGATION, PROGRAMME DE COMMANDE POUR UN TERMINAL DE TELEPHONIE MOBILE ET PROGRAMME

(30) Priorität: 19.12.2001 DE 10162531
(43) Veröffentlichungstag der Anmeldung: 15.09.2004
(73) Patentinhaber: SIEMENS AKTIENGESELLSCHAFT, 80333 München (DE)
(72) Erfinder: REDECKER, Bernd, 32312 Lübbecke (DE)
(86) Internationale Anmeldenummer: PCT/DE2002/004617
(87) Internationale Veröffentlichungsnummer: WO 2003/052707

(56) Entgegenhaltungen:
- EP-A- 1 231 578
- WO-A-02/15062
- WO-A-02/29738
- DE-A- 19 754 384
- GB-A- 2 362 070
- US-A1- 2001 051 915

## Beschreibung

Bisher sind zahlreiche Ansätze für eine Nutzung von Mobiltelefonen zur Abwicklung von Nutzungsberechtigungsüberprüfungs- bzw. Zahlungsvorgängen entwickelt worden. Beispielsweise ist in DE 199 03 822 A1 ein Verfahren zur Durchführung bargeldloser Zahlungen mittels eines Mobilfunktelefons beschrieben. Bei diesem Verfahren wird ein zu zahlender Geldbetrag und eine Kennung einer SIM-Karte (Subscriber Identity Module) des Mobilfunktelefons in eine Händlerstation eingelesen. Zur Übertragung der Kennung der SIM-Karte in die Händlerstation wird eine Verwendung einer Infrarot-Schnittstelle zwischen Mobilfunktelefon und Händlerstation vorgeschlagen. Der zu zahlende Geldbetrag und die Kennung der SIM-Karte werden nach dem Einlesen in die Händlerstation zusammen mit einer Kennung der Händlerstation an eine Abgleicheinrichtung übermittelt und dort überprüft. Bei positivem Überprüfungsergebnis wird eine Transaktion eröffnet. Anschließend erfolgt eine Übermittlung von Transaktionsdaten an das Mobilfunktelefon zur Abfrage einer Bestätigung. Bei einer Bestätigung der Transaktionsdaten wird die Transaktion festgeschrieben, und die Transaktionsdaten werden an eine kontoführende Einrichtung übermittelt.

Das in beschriebene Verfahren ist allerdings eher für ein geringeres Transaktionsdatenaufkommen geeignet. Bedingt durch die Art der Verbindungsaufbauten zur Initiierung und Bestätigung von Zahlungstransaktionen zwischen Mobilfunktelefon, Händlerstation und Abgleicheinrichtung sind Zahlungsvorgänge nämlich zeitintensiv. Kritischer Anwendungsfälle in dieser Hinsicht sind beispielsweise Zahlungsvorgänge an Supermarktkassen, denen das aus DE 199 03 822 A1 bekannte Verfahren unzureichend gerecht wird.

Die US2001/0051915 beschreibt ein System zum Bezahlen mittels eines Mobilfunkgerätes, welches die Zahlungsinformation in kodierter Weise als Barcode auf dem Display darstellt. Zur Prüfung der Authentizität des Nutzers bzw. zur Zahlungsfreigabe muss dieser eine zusätzliche Mobilfunkverbindung zu einem externen Server aufbauen, was bei schlechter Mobilfunkabdeckung bzw. in Stosszeiten jedoch dazu führen kann, dass die Bezahlung via Mobiltelefon nicht möglich ist.

Der vorliegenden Erfindung liegt daher die Aufgabe zugrunde, ein Verfahren und ein System zur Abwicklung von Nutzungsberechtigungsüberprüfungs- und/oder Zahlungsvorgängen mittels eines Mobiltelefonie-Endgeräts zu schaffen, das die Dauer zur Überprüfung von Nutzungsberechtigungen und/oder Durchführung bargeldloser Zahlungstransaktionen erheblich verkürzt, und zur Durchführung des Verfahrens geeignete Systemkomponenten anzugeben.

Erfindungsgemäß wird diese Aufgabe durch ein Verfahren mit den in Anspruch 1 angegebenen Merkmalen, ein System mit den in Anspruch 9 angegebenen Merkmalen, ein Mobiltelefonie-Endgerät mit den in Anspruch 10 angegebenen Merkmalen, eine Abfragestation mit den in Anspruch 11 angegebenen Merkmalen, ein Steuerungsprogramm für ein Mobiltelefonie-Endgerät mit den in Anspruch 12 angegebenen und ein Steuerungsprogramm für eine Abfragestation mit den in Anspruch 13 angegebenen gelöst. Vorteilhafte Weiterbildungen des erfindungsgemäßen Verfahrens sind in den abhängigen Ansprüchen angegeben.

Erfindungsgemäß wird die Dauer zur Überprüfung von Nutzungsberechtigungen bzw. Durchführung bargeldloser Zahlungstransaktionen durch ein optisches Abtasten eines einem Nutzungsberechtigten bzw. Zahlenden zugeordneten Identifikators an einer Abfragestation und durch eine direkte Übermittlung einer Bestätigungsmeldung von einem Mobiltelefonie-Endgerät des Nutzungsberechtigten bzw. Zahlenden an die Abfragestation erheblich verkürzt. Ein optisches Abtasten (Scannen) des Identifikators vermeidet von Infrarot-Übermittlungen bekannte Zeitverzüge, die durch Kompatibilitätsprobleme zwischen beteiligten Komponenten und durch eine Verständigung auf ein zu verwendendes Übertragungsprotokoll bedingt sind. Durch die direkte Übermittlung der Bestätigungsmeldung an die Abfragestation entfällt beispielsweise eine zusätzliche Verzögerungen bedeutende Umleitung der Bestätigungsmeldung über eine Abgleicheinrichtung an die Abfragestation. Die Bestätigungsmeldung kann dadurch bei Bereitstellung einer an das Mobiltelefonie-Endgerät übermittelten Kontrollmeldung in der Abfragestation bereits zu einem sehr frühen Zeitpunkt ausgewertet werden.

Darüber hinaus muß der Identifikator nicht notwendiger eine Kennung einer SIM-Karte darstellen, sondern er kann auch eine Personalausweis-, Kreditkarten-, Kundennummer o.ä. sein. Dadurch läßt sich das erfindungsgemäße Verfahren einfach in unterschiedlichsten Anwendungsumgebungen implementieren. Das Mobiltelefonie-Endgerät kann beispielsweise ein übliches Mobiltelefon, ein elektronischer Assistent/Terminkalender, Communicator, Organizer, Palm-PC oder ein sonstiges portables Endgerät mit einem Funk-Sende/Empfangsmodul sein. Bei der Abfragestation kann es sich beispielsweise um ein beliebiges Kassensystem, eine Bezahlsäule, eine Zugangskontrolleinrichtung oder um ein mobiles Terminal für Kontrollpersonal im öffentlichen Personennahverkehr handeln.

Die vorliegende Erfindung wird nachfolgend an einem Ausführungsbeispiel anhand der Zeichnung näher erläutert. Es zeigt
- Fig. 1: eine Anordnung mit einem Mobiltelefonie-Endgerät, einer Abfragestation, einer Abgleicheinrichtung und einer kontoführenden Einrichtung,
- Fig. 2a-b: ein Ablaufdiagramm für eine Abwicklung eines Nutzungsberechtigungsüberprüfungs- bzw. Zahlungsvorgangs mit Mobiltelefonie-Endgerät.

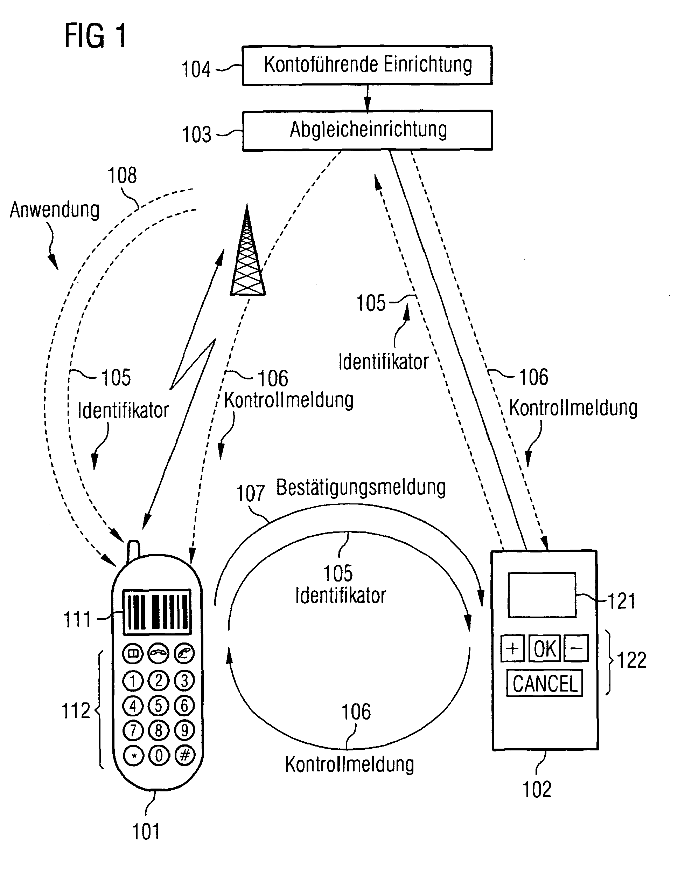

In Figur 1 ist eine Anordnung mit einem Mobiltelefonie-Endgerät 101, einer Abfragestation 102, einer Abgleicheinrichtung 103 und einer kontoführenden Einrichtung 104 dargestellt. Das Mobiltelefonie-Endgerät 101 ist einem Nutzungsberechtigten bzw. Zahlenden zugeordnet, während die Abfragestation 102 einem Dienstleistungsanbieter oder Händler zugeordnet ist. Das Mobiltelefonie-Endgerät 101 weist eine Anzeigeeinrichtung 111 und Bedienungselemente 112 auf. An der Anzeigeeinrichtung 111 sind Text- bzw. Grafikinformationen darstellbar. Derartige Text- bzw. Grafikinformationen können durch eine optische Abtasteinrichtung 121 (Scanner) der Abfragestation 102 erfaßt werden. Zur Steuerung von Nutzer- bzw. Anwendungsdialogen verfügt die Abfragestation 102 über Bedienungselemente 122.

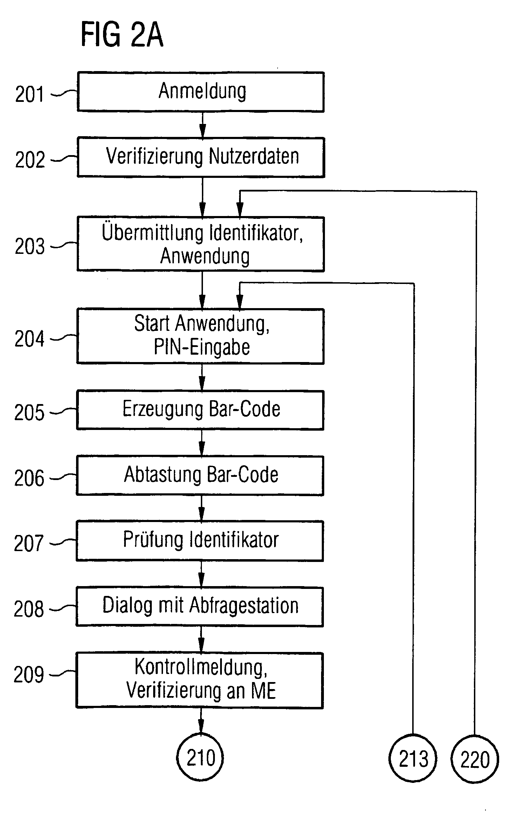

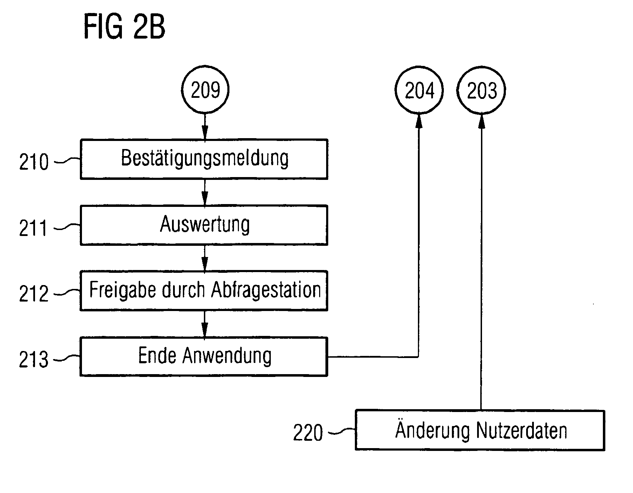

Ausgangspunkt für das nachfolgend beschriebene Verfahren zur Abwicklung eines Nutzungsberechtigungsüberprüfungs- bzw. Zahlungsvorgangs ist eine Anmeldung eines Nutzungsberechtigten bzw. Zahlenden als Nutzer bei einem Betreiber eines Nutzungsberechtigungsüberprüfungs- bzw. Zahlungssystems. Dies entspricht Schritt 201 innerhalb des in Figur 2 dargestellten Ablaufdiagramms. Nach der Anmeldung erfolgt eine Verifizierung von bei der Anmeldung erfaßten Benutzerdaten (Schritt 202). Bei erfolgreicher Verifizierung werden ein dem Nutzungsberechtigten bzw. Zahlenden zugeordneter Identifikator 105 und eine Anwendung 108 an das Mobiltelefonie-Endgerät 101 des Nutzungsberechtigten bzw. Zahlenden übermittelt (Schritt 203). Der Identifikator 105 und die Anwendung 108 werden beispielsweise von einer Abgleicheinrichtung 103 des Nutzungsberechtigungsüberprüfungs- bzw. Zahlungssystembetreibers an das Mobiltelefonie-Endgerät 101 übermittelt.

Die Anwendung 108 ist im wesentlichen ein Steuerungsprogramm für das Mobiltelefonie-Endgerät 101, das bei Ablauf die nachfolgend beschriebenen, durch das Mobiltelefonie-Endgerät 101 durchgeführten Schritte ausführt. In entsprechender Weise wird für die Abfragestation 102 ein Steuerungsprogramm vorgesehen, das durch einen nicht näher dargestellten Mikroprozessor der Abfragestation 102 ausgeführt wird.

Ein Start der übermittelten Anwendung 108 erfolgt auf Anweisung des Nutzungsberechtigten bzw. Zahlenden. Beim Start der Anwendung 108 wird ein Nutzer-PIN zur Authentifizierung abgefragt (Schritt 204). Danach wird aus dem abrufbar bereitgestellten Identifikator 105 ein Barcode erzeugt und dieser an der Anzeigeeinrichtung 111 des Mobiltelefonie-Endgeräts 101 dargestellt (Schritt 205). Anschließend wird der Barcode an der Abfragestation 102 abgetastet (Schritt 206), und der durch den Barcode übermittelte Identifikator 105 wird überprüft (Schritt 207). Die Überprüfung des Identifikators 105 kann direkt durch die Abfragestation 102 erfolgen. Alternativ dazu kann der Identifikator 105 an die Abgleicheinrichtung 103 übermittelt und auf Basis dort gespeicherter Datenbankeinträge geprüft werden.

Bei erfolgreicher Überprüfung wird optional ein Nutzer- bzw. Anwendungsdialog mit der Abfragestation 101 angeboten (Schritt 208), beispielsweise zur Auswahl einer Nutzungs- bzw. Zahlungsoption. Nachfolgend wird bei erfolgreicher Überprüfung des Identifikators 105 eine Kontrollmeldung 106 mit einer Aufforderung zur Verifizierung und Bestätigung eines Nutzungsberechtigungsüberprüfungs- bzw. Zahlungsvorgangs an das Mobiltelefonie-Endgerät 101 übermittelt (Schritt 209). Die Kontrollmeldung kann beispielsweise von der Abgleicheinrichtung 103 über ein Funkschnittstelle an das Mobiltelefonie-Endgerät 101 übermittelt werden. Eine Alternative dazu ist eine Übermittlung der Kontrollmeldung 106 über eine Bluetooth-Verbindung von der Abfragestation 102 an das Mobiltelefonie-Endgerät 101. Diese Alternative ermöglicht einen besonders zügigen Verfahrensablauf.

Zur Nutzungseinräumung bzw. Zahlungsleistung wird die Kontrollmeldung 106 durch Übermittlung einer Bestätigungsmeldung 107 vom Mobiltelefonie-Endgerät 101 an die Abfragestation 102 beantwortet (Schritt 210). Die Beantwortung kann dabei entweder auf Anweisung durch den Nutzungsberechtigten bzw. Zahlenden oder automatisch durch das Mobiltelefonie-Endgerät 101 erfolgen. Die Bestätigungsmeldung 107 wird entweder an der Anzeigeeinrichtung 111 des Mobiltelefonie-Endgeräts 101 als Barcode dargestellt und an der Abfragestation 102 optisch abgetastet oder über eine Bluetooth-Verbindung vom Mobiltelefonie-Endgerät 101 an die Abfragestation 102 übertragen.

Ein besonders zügiger Verfahrensablauf ergibt sich, wenn die Kontrollmeldung 106 im wesentlichen gleichzeitig mit ihrer Übermittlung an das Mobiltelefonie-Endgerät 101 in der Abfragestation 102 bereitgestellt wird. In diesem Fall kann eine Auswertung der Bestätigungsmeldung 107 bereits frühzeitig in der Abfragestation 102 erfolgen (Schritt 211). Bei einer solchen Auswertung werden die Kontrollmeldung 106 und die Bestätigungsmeldung 107 im einfachsten Fall auf übereinstimmende oder zueinander passende Merkmale verglichen.

Bei einem positiven Auswertungsergebnis erfolgt anschließend eine Freigabe zur Nutzungseinräumung bzw. Zahlungsleistung und Überlassung durch die Abfragestation 102 (Schritt 212). Abschließend wird die auf dem Mobiltelefonie-Endgerät 101 ablaufende Anwendung 108 beendet (Schritt 213) und kann danach erneut gestartet werden.

Bei einer Abwicklung eines Zahlungsvorgangs kann das Auswertungsergebnis nach Schritt 211 zusammen mit Zahlungstransaktionsdaten an die Abgleicheinrichtung 103 übermittelt werden. Je nach Art des Auswertungsergebnisses wird eine entsprechende Zahlungstransaktion entweder verworfen oder festgeschrieben. Bei einem Festschreiben der Zahlungstransaktion werden die Zahlungstransaktionsdaten zur Auslösung eines Buchungsvorgangs an eine kontoführende Einrichtung 104 weitergeleitet.

Eine direkte Implementierung des vorangehend beschriebenen Verfahrens ist auf einem JAVA-fähigen Mobiltelefonie-Endgerät 101 möglich. Hierzu wird die Anwendung 108 auf dem Mobiltelefonie-Endgerät 101 installiert. Alternativ zum Schutz der Anwendung 108 durch einen Nutzer-PIN vor unberechtigtem Zugriff können auch biometrische Nutzermerkmale verwendet werden.

Weitere Implementierungen des vorangehend beschriebenen Verfahrens mittels WAP oder SMS-Varianten, wie EMS und MMS, sind ebenfalls technisch realisierbar. Bei einer WAP-Implementierung wird anstelle der Anwendung 108 ein URL zum Zugriff auf einen entsprechenden WAP-Server an das Mobiltelefonie-Endgerät 101 übermittelt, und die Erzeugung des Barcodes erfolgt durch einen WAP-Server.

Für das vorangehend beschriebene Verfahren sind ohne Beschränkung der Allgemeingültigkeit nachstehend beschriebene Einsatzszenarien möglich.

### Szenario 1: Veranstaltungskasse (Ausstellung, Kino, Konzert)

Auf dem Mobiltelefonie-Endgerät eines Kunden ist die oben genannte Anwendung installiert. Die Anwendung wird gestartet, der Kunde gibt seinen Nutzer-PIN ein, und das Mobiltelefonie-Endgerät erzeugt einen eindeutigen Barcode. Dieser Barcode wird an einer Abfragestation im Eintrittsbereich des Veranstaltungsorts abgetastet. Auf diese Weise wird ein Kunden-Identifikator ermittelt. Durch einen mit der Abfragestation verbundenen Server wird überprüft, ob der Kunde die betreffende Veranstaltung gebucht bzw. bezahlt hat. Nach Übermittlung und Auswertung von Kontroll- und Bestätigungsmeldung wird der Kunde ggf. eingelassen.

### Szenario 2 : Bahn/ÖPNV

Der Kunde startet die Anwendung auf seinem Mobiltelefonie-Endgerät und gibt seinen Nutzer-PIN ein. Das Mobiltelefonie-Endgerät erzeugt einen eindeutigen Barcode. Der Kunde hält sein Mobiltelefonie-Endgerät vor eine optische Abtasteinrichtung eines Fahrkartenautomaten, und die Abtasteinrichtung erfaßt den Barcode. Anschließend wird aus dem erfaßten Barcode der Kunden-Identifikator ermittelt. Auf einem mit dem Fahrkartenautomaten verbundenen zentralen Server wird der Kunden-Identifikator zusammen mit einer von dem Kunden eingegebenen Buchungsinformation gespeichert. Bei einer Fahrkartenkontrolle wird wiederum der am Mobiltelefonie-Endgerät angezeigte Barcode erfaßt. Durch einen Zugriff auf den zentralen Server wird ein Abgleich mit den Buchungsinformationen und eine Fahrscheinentwertung vorgenommen.

### Szenario 3: Tankstelle

An einer Tankstelle befindet sich eine Bezahlsäule, an der einen Benutzung von Mobiltelefonie-Endgeräten möglich ist.
Der Kunde startet die Anwendung auf seinem Mobiltelefonie-Endgerät und gibt seinen Nutzer-PIN ein. Das Mobiltelefonie-Endgerät erzeugt einen eindeutigen Barcode. Der Kunde hält sein Mobiltelefonie-Endgerät vor eine optische Abtasteinrichtung der Bezahlsäule, der Barcode wird erfaßt und der Kunden-Identifikator ermittelt. Anschließend wird ein Dialog mit dem Kunden geführt, an welcher Zapfsäule er für welchen Betrag tanken möchte. Diese Daten werden als Zahlungstransaktionsdaten zusammengefaßt und durch eine Kontrollmeldung an das Mobiltelefonie-Endgerät des Kunden übermittelt. Nachfolgend hat der Kunde die Möglichkeit zur Bestätigung der Zahlungstransaktion durch Beantwortung der Kontrollmeldung mit einer Bestätigungsmeldung, die wiederum an die Bezahlsäule übermittelt wird. bestätigt der Benutzer die Daten. Bei einem positiven Auswertungsergebnis aus einem Vergleich von Kontroll- und Bestätigungsmeldung gibt die Bezahlsäule die gewünschte Zapfsäule für einen gewählten Zahlbetrag frei, und der Kunde kann tanken.

### Szenario 4: Rabattsystem

Ein besonderes Szenario ist ein Rabattsystem. In diesem Fall kann aufgrund der geringen Sicherheitsanforderungen sogar auf eine Übermittlung von Kontroll- und Bestätigungsmeldungen verzichtet werden. Manipulationsversuche laufen hier ins Leere, da ein etwaiger Rabatt allenfalls einem Dritten und nicht dem Kunden an der Abfragestation gutgeschrieben würde. Damit entfällt die Manipulationsmotivation für den Kunden an der Abfragestation.

Die beschriebenen Szenarien verdeutlichen, daß einer Abfragestation im einfachsten Fall nur die Funktion von Abtastung des Barcodes und Übermittlung bzw. Weiterleitung des Abtastungsergebnisses zukommt.

Die Anwendung der vorliegenden Erfindung ist nicht auf die hier beschriebenen Ausführungsbeispiele beschränkt.

## Patentansprüche

1. Verfahren zur Abwicklung von Nutzungsberechtigungsüberprüfungs- und/oder Zahlungsvorgängen mittels eines Mobiltelefonie-Endgeräts bei dem
- ein einem Nutzungsberechtigten und/oder Zahlenden zugeordneter Identifikator zur Darstellung an einer Anzeigeinrichtung eines dem Nutzungsberechtigten und/oder Zahlenden zugeordneten Mobiltelefonie-Endgeräts abrufbar bereitgestellt wird,
- der Identifikator auf Anweisung des Nutzungsberechtigten und/oder Zahlenden an der Anzeigeeinrichtung dargestellt und an einer Abfragestation optisch abgetastet wird,
- eine Kontrollmeldung mit einer Aufforderung zur Bestätigung eines Nutzungsberechtigungsüberprüfungs- und/oder Zahlungsvorgangs an das Mobiltelefonie-Endgerät übermittelt wird,
- zur Nutzungseinräumung und/oder Zahlungsleistung die Kontrollmeldung durch Übermittlung einer Bestätigungsmeldung vom Mobiltelefonie-Endgerät direkt an die Abfragestation beantwortet wird.

2. Verfahren nach Anspruch 1,
bei dem ein Steuerungsprogramm auf dem Mobiltelefonie-Endgerät installiert ist, das auf Anweisung des Nutzungsberechtigten und/oder Zahlenden zu dessen Authentifizierung gestartet wird und aus dem im Mobiltelefonie-Endgerät gespeicherten Identifikator einen Barcode erzeugt.

3. Verfahren nach Anspruch 2,
bei dem zum Schutz vor unberechtigtem Zugriff ein Nutzer-PIN und/oder ein biometrisches Nutzermerkmal verwendet wird.

4. Verfahren nach Anspruch 3,
bei dem das Steuerungsprogramm eine JAVA-Anwendung ist.

5. Verfahren nach einem der Ansprüche 1 bis 4,
bei dem die Kontrollmeldung auf Anweisung des Nutzungsberechtigten und/oder Zahlenden beantwortet wird.

6. Verfahren nach einem der Ansprüche 1 bis 4,
bei dem die Kontrollmeldung automatisch durch das Mobiltelefonie-Endgerät beantwortet wird.

7. Verfahren nach einem der Ansprüche 1 bis 6,
bei dem die Kontrollmeldung im wesentlichen gleichzeitig mit ihrer Übermittlung an das Mobiltelefonie-Endgerät in der Abfragestation bereitgestellt wird, und bei dem die Bestätigungsmeldung in der Abfragestation ausgewertet wird.

8. Verfahren nach einem der Ansprüche 1 bis 7,
bei dem die Kontrollmeldung durch eine Abgleicheinrichtung übermittelt wird.

9. Verfahren nach einem der Ansprüche 1 bis 8,
bei dem die Kontrollmeldung über eine Bluetooth-Verbindung von der Abfragestation an das Mobiltelefonie-Endgerät übermittelt wird.

10. Verfahren nach einem der Ansprüche 1 bis 9,
bei dem die Bestätigungsmeldung an der Anzeigeeinrichtung des Mobiltelefonie-Endgeräts dargestellt und an der Abfragestation optisch abgetastet wird.

11. Verfahren nach einem der Ansprüche 1 bis 10,
bei dem die Bestätigungsmeldung über eine Bluetooth-Verbindung vom Mobiltelefonie-Endgerät an die Abfragestation übermittelt wird.

12. System zur Abwicklung von Nutzungsberechtigungsüberprüfungs- und/oder Zahlungsvorgängen mit
- einem einem Nutzungsberechtigten und/oder Zahlenden zugeordneten Mobiltelefonie-Endgerät,
- einer Abfragestation,
- einer Einrichtung für eine Übermittlung einer Kontrollmeldung mit einer Aufforderung zur Bestätigung eines Nutzungsberechtigungsüberprüfungs- und/oder Zahlungsvorgangs an das Mobiltelefonie-Endgerät,
wobei das Mobiltelefonie-Endgerät
- eine Anzeigeeinrichtung,
- eine Einrichtung für eine abrufbare Bereitstellung eines dem Nutzungsberechtigten und/oder Zahlenden zugeordneten Identifikators zur Darstellung an der Anzeigeinrichtung,
- eine Einrichtung für eine Beantwortung der Kontrollmeldung und
- eine Einrichtung für eine direkte Übermittlung einer Bestätigungsmeldung an die Abfragestation als Antwort auf die Kontrollmeldung zur Nutzungseinräumung und/oder Zahlungsleistung aufweist,
und wobei die Abfragestation
- eine optische Abtasteinrichtung zur Abtastung des auf Anweisung des Nutzungsberechtigten und/oder Zahlenden an der Anzeigeeinrichtung dargestellten Identifikators aufweist.

13. Mobiltelefonie-Endgerät mit
- einer Anzeigeeinrichtung,
- einer Einrichtung für eine abrufbare Bereitstellung eines einem Nutzungsberechtigten und/oder Zahlenden zugeordneten Identifikators zur Darstellung an der Anzeigeinrichtung und
- einer Einrichtung für eine Beantwortung einer Kontrollmeldung mit einer Aufforderung zur Bestätigung eines Nutzungsberechtigungsüberprüfungs- und/oder Zahlungsvorgangs und
- einer Einrichtung für eine direkte Übermittlung einer Bestätigungsmeldung an eine Abfragestation als Antwort auf die Kontrollmeldung zur Nutzungseinräumung und/oder Zahlungsleistung.

14. Abfragestation mit
- einer optische Abtasteinrichtung zur Abtastung eines auf Anweisung eines Nutzungsberechtigten und/oder Zahlenden an einer Anzeigeeinrichtung eines dem Nutzungsberechtigten und/oder Zahlenden zugeordneten Mobiltelefonie-Endgeräts dargestellten Identifikators,
- einer Einrichtung für eine Bereitstellung einer an das Mobiltelefonie-Endgerät übermittelten Kontrollmeldung mit einer Aufforderung zur Bestätigung eines Nutzungsberechtigungsüberprüfungs- und/oder Zahlungsvorgangs und
- einer Einrichtung für eine Auswertung einer als Antwort auf die Kontrollmeldung vom Mobiltelefonie-Endgerät direkt übermittelten Bestätigungsmeldung zur Nutzungseinräumung und/oder Zahlungsleistung.

15. Steuerungsprogramm für ein Mobiltelefonie-Endgerät, das in einen Arbeitsspeicher des Mobiltelefonie-Endgeräts ladbar ist und zumindest einen Codeabschnitt aufweist, bei dessen Ausführung
- ein einem Nutzungsberechtigten und/oder Zahlenden zugeordneter Identifikator zur Darstellung an einer Anzeigeinrichtung des dem Nutzungsberechtigten und/oder Zahlenden zugeordneten Mobiltelefonie-Endgeräts abrufbar bereitgestellt wird,
- der Identifikator auf Anweisung des Nutzungsberechtigten und/oder Zahlenden an der Anzeigeeinrichtung dargestellt wird,
- zur Nutzungseinräumung und/oder Zahlungsleistung eine Kontrollmeldung mit einer Aufforderung zur Bestätigung eines Nutzungsberechtigungsüberprüfungs- und/oder Zahlungsvorgangs durch direkte Übermittlung einer Bestätigungsmeldung an eine Abfragestation beantwortet wird,
wenn das Steuerungsprogramm im Mobiltelefonie-Endgerät abläuft.

16. Steuerungsprogramm für eine Abfragestation, das in einen Arbeitsspeicher der Abfragestation ladbar ist und zumindest einen Codeabschnitt aufweist, bei dessen Ausführung
- ein einem Nutzungsberechtigten und/oder Zahlenden zugeordneter, auf Anweisung des Nutzungsberechtigten und/oder Zahlenden an einer Anzeigeeinrichtung eines Mobiltelefonie-Endgeräts dargestellter Identifikator optisch abgetastet wird,
- eine an das Mobiltelefonie-Endgerät übermittelte Kontrollmeldung mit einer Aufforderung zur Bestätigung eines Nutzungsberechtigungsüberprüfungs- und/oder Zahlungsvorgangs im wesentlichen gleichzeitig mit ihrer Übermittlung an das Mobiltelefonie-Endgerät in der Abfragestation bereitgestellt wird,
- die direkt vom Mobiltelefonie-Endgerät übermittelte Bestätigungsmeldung ausgewertet wird.
wenn das Steuerungsprogramm in der Abfragestation abläuft.

## Claims

1. Method for carrying out verification processes with regard to authorization of use and/or payment processes by means of a mobile telephone terminal in which
- an identifier which can be called up and is associated with an authorized person and/or payer is provided for display on a display device of a mobile telephone terminal associated with the authorized user and/or payer.
- The identifier is displayed on the display device and optically scanned at an interrogation station on the instructions of the authorized user and/or payer.
- A control message with a request for confirmation of a process verifying the authorization of use and/or payment process is transmitted to the mobile telephone terminal.
- In order to grant use and/or carry out payment, the control message receives a reply by transmission of a confirmation message from the mobile telephone terminal to the interrogation station.

2. Method according to claim 1
in which a control program is installed on a mobile telephone terminal, and is started on instruction from the authorized user and/or payer in order to authenticate them, and from which an identifier stored in the mobile telephone terminal generates a barcode.

3. Method according to claim 2,
in which a user PIN and/or a biometric user feature is used to protect against unauthorized access.

4. Method according to claim 2,
in which the control program is a JAVA application.

5. Method according to one of the claims 1 to 4,
in which the control message receives a reply on the instructions of the authorized user and/or payer.

6. Method according to one of the claims 1 to 4,
in which the control message automatically receives a reply from the mobile telephone terminal.

7. Method according to one of claims 1 to 6,
in which the control message is essentially provided in the interrogation station at the same time as its transmission to the mobile telephone terminal and in which the confirmation message is evaluated in the interrogation station.

8. Method according to one of the claims 1 to 7,
in which the control message is transmitted by means of a matching device.

9. Method according to one of claims 1 to 8,
in which the control message is transmitted by means of a Bluetooth connection from the interrogation station to the mobile telephone terminal.

10. Method according to one of Claims 1 to 9,
in which the confirmation message is displayed on the display device of the mobile telephone terminal and is optically scanned at the interrogation station.

11. Method according to one of Claims 1 to 10,
in which the confirmation message is transmitted by means of a Bluetooth connection from the mobile telephone terminal to the interrogation station.

12. System for carrying out verification processes with regard to authorization of use and/or payment process with
- a mobile telephone terminal associated with an authorized user and/or payer
- an interrogation station
- a device for transmitting a control message requiring the confirmation of a verification process with regard to authorization of use and/or payment process in the mobile telephone terminal
whereby the mobile telephone terminal comprises
- a display device
- a device for providing an identifier associated with the authorized user and/or payer for display on the display device and which can be called-up.
- a device for receiving a reply to the control message
- a device for transmitting a confirmation message to the interrogation station as a reply to the control message in order to grant use and/or carry out payment,
and whereby the interrogation station comprises
- an optical scanning device for scanning the identifiers represented on the display device on the instructions of the authorized user and/or payer.

13. Mobile telephone terminal comprising
- a display device
- a device providing an identifier associated with an authorized user and/or payer which can be called-up and is represented on a display device
- a device for receiving a reply to a control message requesting confirmation of a verification process with regard to authorization of use and/or payment processes
- a device for directly transmitting a confirmation message to the interrogation station as a reply to the control message in order to grant use and/or carry out payment.

14. Interrogation station with
- an optical scanning device for scanning an identifier displayed on a mobile telephone terminal associated with an authorized user and a payer, in a scanning device, on the instructions of an authorized person and/or payer
- a device for providing a control message transmitted to the mobile telephone terminal with requesting confirmation of a verification process with regard to authorization of use and/or payment process and
- a device for evaluating a transmitted confirmation message received as a reply to the control message from the mobile telephone terminal in order to grant use and/or carry out payment.

15. Control program for a mobile telephone terminal which can be loaded into main memory of the mobile telephone terminal and features at least one code section, with
- an identifier associated with an authorized user and/or payer for display on the display device of the mobile telephone terminal associated with the authorized user and/or payer which can be called-up
- the identifier is displayed on the display device on the instructions of the authorized user and/or payer
- a control message requesting a confirmation of a verification process with regard to authorization of use and/or payment processes by transmitting a confirmation message to an interrogation station, receives a reply in order to grant use and/or carry out payment
if the control program is running in the mobile telephone terminal.

16. Control program for an interrogation station which is loadable in a main memory of the interrogation station and comprises at least one code section, with an embodiment
- comprising an identifier associated with an authorized user and/or payer, which is optically scanned on the instructions of the authorized user and/or payer in a display device of a mobile telephone terminal
- comprising a control message transmitted to the mobile telephone terminal requesting confirmation of a verification process with regard to authorization of use and/or payment process whereby said control message is essentially provided in the interrogation station at the same time as its transmission to the mobile telephone terminal
- the confirmation messages transferred directly from the mobile telephone terminal are evaluated
if the control program is running in the interrogation station.

## Revendications

1. Procédé de déroulement de processus de vérification de l'autorisation d'utilisation et/ou de paiement à l'aide d'un terminal de téléphonie mobile, dans lequel
- un identificateur affecté à une personne ayant droit à l'utilisation et/ou à une personne payant est fourni, de manière à pouvoir être appelé, pour la représentation sur un dispositif de visualisation d'un terminal de téléphonie mobile affecté à la personne ayant droit à l'utilisation et/ou à la personne payant,
- l'identificateur est représenté sur le dispositif de visualisation sur instruction de la personne ayant droit à l'utilisation et/ou de la personne payant et est exploré optiquement sur une station d'interrogation,
- un message de contrôle est transmis au terminal de téléphonie mobile, avec une invitation à confirmer un processus de vérification de l'autorisation d'utilisation et/ou un processus de paiement,
- pour autoriser l'utilisation et/ou effectuer le paiement, une réponse au message de contrôle est donnée directement à la station d'interrogation par transmission d'un message de confirmation par le terminal de téléphonie mobile.

2. Procédé selon la revendication 1,
dans lequel un programme de commande est installé sur le terminal de téléphonie mobile, ce programme étant démarré, sur instruction de la personne ayant droit à l'utilisation et/ou de la personne payant, pour son authentification et générant un code à barres à partir de l'identificateur mémorisé dans le terminal de téléphonie mobile.

3. Procédé selon la revendication 2,
dans lequel un numéro d'identification personnel et/ou un critère d'utilisation biométrique sont utilisés pour la protection contre l'accès non autorisé.

4. Procédé selon la revendication 3,
dans lequel le programme de commande est une application JAVA.

5. Procédé selon l'une quelconque des revendications 1 à 4,
dans lequel une réponse est donnée au message de contrôle sur instruction de la personne ayant droit à l'utilisation et/ou de la personne payant.

6. Procédé selon l'une quelconque des revendications 1 à 4,
dans lequel une réponse est donnée automatiquement au message de contrôle par le terminal de téléphonie mobile.

7. Procédé selon l'une quelconque des revendications 1 à 6,
dans lequel le message de contrôle est fourni dans la station d'interrogation essentiellement en même temps que sa transmission au terminal de téléphonie mobile, et dans lequel le message de confirmation est évalué dans la station d'interrogation.

8. Procédé selon l'une quelconque des revendications 1 à 7,
dans lequel le message de contrôle est transmis par un dispositif de comparaison.

9. Procédé selon l'une quelconque des revendications 1 à 8,
dans lequel le message de contrôle est transmis par la station d'interrogation au terminal de téléphonie mobile par l'intermédiaire d'une liaison Bluetooth.

10. Procédé selon l'une quelconque des revendications 1 à 9,
dans lequel le message de confirmation est représenté sur le dispositif de visualisation du terminal de téléphonie mobile et est exploré optiquement sur la station d'interrogation.

11. Procédé selon l'une quelconque des revendications 1 à 10,
dans lequel le message de confirmation est transmis par le terminal de téléphonie mobile à la station d'interrogation par l'intermédiaire d'une liaison Bluetooth.

12. Système pour le déroulement de processus de vérification de l'autorisation d'utilisation et/ou de paiement, comprenant
- un terminal de téléphonie mobile affecté à une personne ayant droit à l'utilisation et/ou à une personne payant,
- une station d'interrogation,
- un dispositif pour une transmission d'un message de contrôle avec une invitation à confirmer un processus de vérification de l'autorisation d'utilisation et/ou de paiement au terminal de téléphonie mobile,
le terminal de téléphonie mobile présentant
- un dispositif de visualisation,
- un dispositif pour fournir un identificateur, pouvant être appelé, affecté à la personne ayant droit à l'utilisation et/ou à la personne payant, pour la représentation sur le dispositif de visualisation,
- un dispositif pour donner une réponse au message de contrôle,
- un dispositif pour une transmission directe d'un message de confirmation à la station d'interrogation, en réponse au message de contrôle afin d'autoriser l'utilisation et/ou d'effectuer le paiement,
et la station d'interrogation présentant
- un dispositif d'exploration optique pour l'exploration de l'identificateur représenté sur le dispositif de visualisation sur instruction de la personne ayant droit à l'utilisation et/ou de la personne payant.

13. Terminal de téléphonie mobile, comprenant
- un dispositif de visualisation,
- un dispositif pour fournir un identificateur, pouvant être appelé, affecté à une personne ayant droit à l'utilisation et/ou à une personne payant, pour la représentation sur le dispositif de visualisation,
et
- un dispositif pour donner une réponse à un message de contrôle, avec une invitation à confirmer un processus de vérification de l'autorisation d'utilisation et/ou de paiement et
- un dispositif pour une transmission directe d'un message de confirmation à une station d'interrogation, en réponse au message de contrôle pour autoriser l'utilisation et/ou effectuer le paiement.

14. Station d'interrogation, comprenant
- un dispositif d'exploration optique pour l'exploration d'un identificateur représenté sur un dispositif de visualisation d'un terminal de téléphonie mobile affecté à la personne ayant droit à l'utilisation et/ou de la personne payant, sur instruction d'une personne ayant droit à l'utilisation et/ou d'une personne payant,
- un dispositif pour fournir un message de contrôle transmis au terminal de téléphonie mobile, avec une invitation à confirmer un processus de vérification de l'autorisation d'utilisation et/ou un processus de paiement et
- un dispositif pour une évaluation d'un message de confirmation transmis directement par le terminal de téléphonie mobile en réponse au message de contrôle pour autoriser l'utilisation et/ou effectuer le paiement.

15. Programme de commande pour un terminal de téléphonie mobile, qui est téléchargeable dans une mémoire de travail du terminal de téléphonie mobile et présente au moins une section à code, pendant l'exécution duquel
- un identificateur, affecté à une personne ayant droit à l'utilisation et/ou à une personne payant, est fourni de manière à pouvoir être appelé pour la représentation sur un dispositif de visualisation du terminal de téléphonie mobile affecté à la personne ayant droit à l'utilisation et/ou à la personne payant,
- l'identificateur est représenté sur le dispositif de visualisation sur instruction de la personne ayant droit à l'utilisation et/ou de la personne payant,
- pour autoriser l'utilisation et/ou effectuer le paiement, un message de contrôle est donné en réponse, avec invitation de confirmer un processus de vérification de l'autorisation d'utilisation et/ou de paiement, par transmission directe d'un message de confirmation à une station d'interrogation,
lorsque le programme de commande se déroule dans le terminal de téléphonie mobile.

16. Programme de commande pour une station d'interrogation, qui est téléchargeable dans une mémoire de travail de la station d'interrogation et présente au moins une section à code, pendant l'exécution duquel
- un identificateur, affecté à une personne ayant droit à l'utilisation et/ou à une personne payant et représenté sur un dispositif de visualisation d'un terminal de téléphonie mobile sur instruction de la personne ayant droit à l'utilisation et/ou de la personne payant, est exploré optiquement,
- un message de contrôle transmis au terminal de téléphonie mobile, avec une invitation de confirmer un processus de vérification de l'autorisation d'utilisation et/ou de paiement, est fourni dans la station d'interrogation essentiellement en même temps que sa transmission au terminal de téléphonie mobile,
- le message de confirmation transmis directement par le terminal de téléphonie mobile est évalué
lorsque le programme de commande se déroule dans la station d'interrogation.
